# EUROPEAN PATENT APPLICATION

(11) **EP 2 613 036 A2**
(43) Date of publication of application: **10.07.2013**
(21) Application number: 12198340.7
(22) Date of filing: 20.12.2012
(51) Int. Cl.: F02C 7/045

(54) **Gas turbine inlet system**

(30) Priority: 04.01.2012 US 201213343401
(71) Applicant: General Electric Company, Schenectady, NY 12345 (US)
(72) Inventor: Merchant, Laxmikant, 560066 Bangalore (IN); Venugopal Setty, Dinesh, 560066 Bangalore (IN)
(74) Representative: Cleary, Fidelma

(57) **Abstract**

A gas turbine inlet system includes a main inlet portion (12), wherein an airflow is introduced to the gas turbine inlet system. Also included is a silencer assembly (18). The silencer assembly includes a first silencing panel (22), wherein the first silencing panel is oriented substantially perpendicularly to the airflow, and wherein the first silencing panel includes a first plurality of airflow apertures. The silencer assembly also includes a second silencing panel (22), wherein the second silencing panel is oriented substantially perpendicularly to the airflow, and wherein the second silencing panel includes a second plurality of airflow apertures.

## Description

### BACKGROUND OF THE INVENTION

The subject matter disclosed herein relates to gas turbine systems, and more particularly to inlet silencers of such systems.

Often, a gas turbine inlet system includes a distinct duct to house 8-12 foot long baffles that function as silencers. The baffles are aligned longitudinally and in parallel with inlet airflow direction. The inlet airflow passes through gaps defined by the baffles and provide a direct line of sight for reverberating sound waves passing upstream through the gaps of the baffles. Therefore, the sound waves are permitted to travel in an uninterrupted manner toward a main inlet of the gas turbine inlet system. Furthermore, such an uninterrupted path within the gap allows for enhanced airflow velocity to result in an undesirably high pressure drop throughout the gas turbine inlet system.

### BRIEF DESCRIPTION OF THE INVENTION

According to another aspect of the invention, a gas turbine inlet system includes a main inlet portion, wherein an airflow is introduced to the gas turbine inlet system. Also included is a silencer assembly. The silencer assembly includes a first silencing panel, wherein the first silencing panel is oriented substantially perpendicularly to the airflow, and wherein the first silencing panel includes a first plurality of airflow apertures. The silencer assembly also includes a second silencing panel, wherein the second silencing panel is oriented substantially perpendicularly to the airflow, and wherein the second silencing panel includes a second plurality of airflow apertures.

According to yet another aspect of the invention, a gas turbine inlet system includes a main inlet portion, wherein an airflow is introduced to the gas turbine inlet system. Also included is a first group of parallel silencing panels that are oriented substantially perpendicularly to the airflow, wherein the first group of parallel silencing panels include a first plurality of gaps therebetween. Further included is a second group of parallel silencing panels that are oriented substantially perpendicularly to the airflow, wherein the second group of parallel silencing panels includes a second plurality of gaps therebetween, wherein the first plurality of gaps is aligned in a first series of airflow planes and the second plurality of gaps is aligned in a distinct second series of airflow planes.

According to one aspect of the invention, a gas turbine inlet system includes a main inlet portion, wherein an airflow is introduced to the gas turbine inlet system. The gas turbine inlet system also includes a silencer assembly including a first plurality of silencing panels having a first alignment and a second plurality of silencing panels having a second alignment.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a side elevational view of a gas turbine inlet system;
FIG. 2 is a side elevational view of a transition duct of the gas turbine inlet system;
FIG. 3 is a side perspective view of first embodiment of a silencer panel system within the transition duct;
FIG. 4 is a rear perspective view of the first embodiment of the silencer panel system;
FIG. 5 is a front elevational view of the first embodiment of the silencer panel;
FIG. 6 is an enlarged front elevational view of a portion of the first embodiment of the silencer panel of FIG. 5;
FIG. 7 is a cross-sectional view of the portion of the first embodiment of the silencer panel taken along line VII-VII of FIG. 6;
FIG. 8 is a side perspective view of a second embodiment of a silencer panel system within the transition duct;
FIG. 9 is a side perspective view of the second embodiment of the silencer panel system;
FIG. 10 is a side elevational schematic view of the second embodiment of the silencer panel system;
FIG. 11 is a side elevational view of the second embodiment of the silencer panel system; and
FIG. 12 is a side elevational view of a third embodiment of the silencer panel system.

The detailed description explains embodiments of the invention, together with advantages and features, by way of example with reference to the drawings.

### DETAILED DESCRIPTION OF THE INVENTION

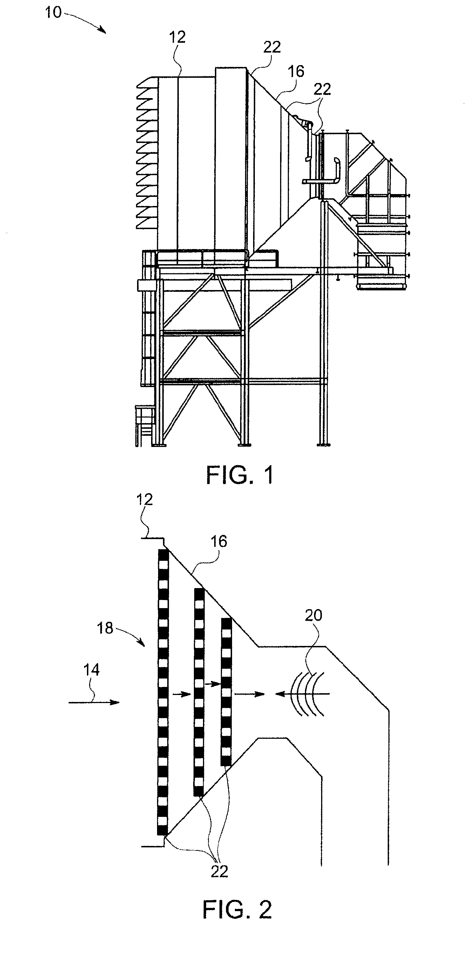

Referring to FIGS. 1 and 2, a gas turbine inlet system 10 includes a main inlet portion 12 configured to receive an airflow 14 traveling predominantly in a first direction. The airflow 14 travels from the main inlet portion 12 through a transition duct 16 that narrows in a downstream direction and into various other portions of the gas turbine inlet system 10. A silencer assembly 18 is disposed, at least in part, within the transition duct 16 and functions to dampen the sound associated with reverberating sound waves 20 that are generated by the gas turbine inlet system 10 and gas turbine itself as the airflow 14 passes through them. The sound waves 20 travel substantially opposite in direction to the airflow 14 and thereby interact with the silencer assembly 18 disposed within the transition duct 16. In addition to functioning as a sound dampener, the presence of the silencer assembly 18 results in a flow rate of the airflow 14 that is higher than that of a flow rate produced in an inlet system that has silencers located in a smaller duct downstream of the transition duct 16.

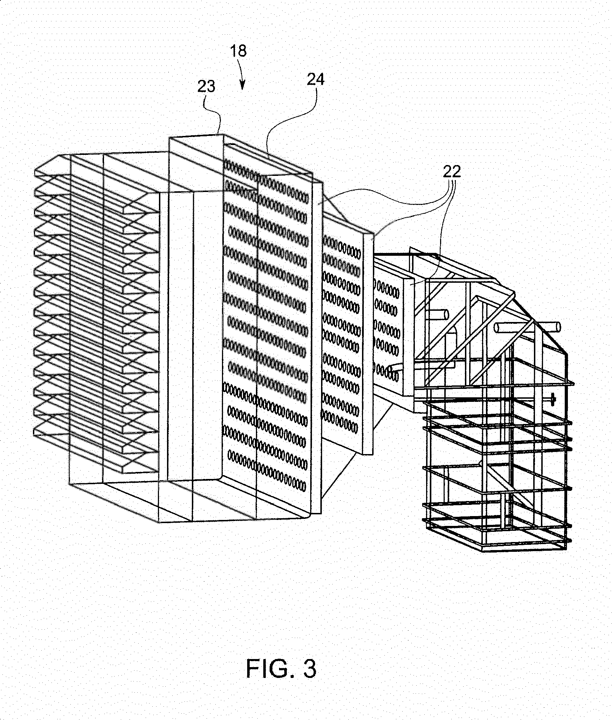

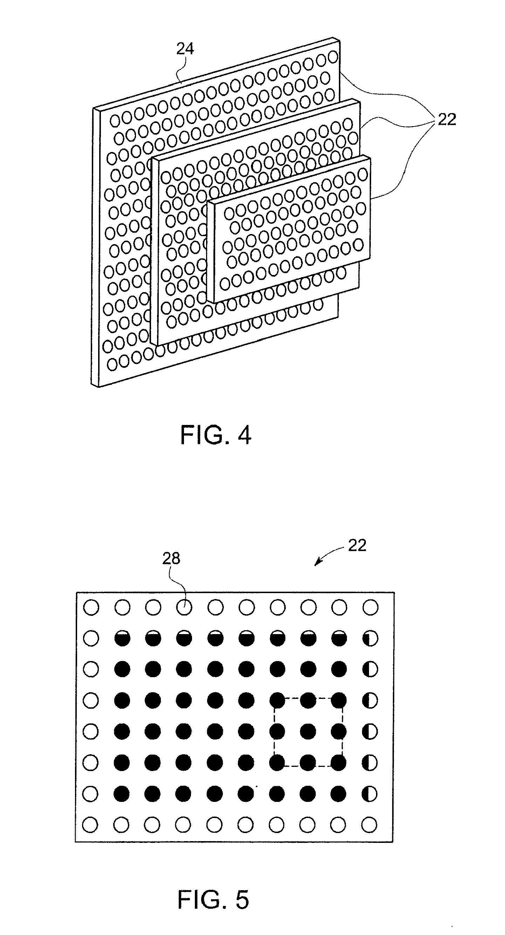

Referring to FIGS. 3 and 4, a first embodiment of the silencer assembly 18 is illustrated. The silencer assembly 18 includes at least one, and typically a plurality of, silencer panels 22 that are arranged relatively parallel to each other. The illustrated silencer panels 22 have a relatively rectangular or square geometry that corresponds to an interior surface 23 of the transition duct 16. It is also conceivable that various other geometries may be employed to suit the configuration of the transition duct 16. The silencer panels 22 are disposed in series and each have an outer perimeter 24. When disposed within the transition duct 16, the outer perimeter 24 of the silencer panels 22 located downstream is smaller than that of the outer perimeter 24 of respective upstream silencer panels 22. This is due to the narrowing of the transition duct 16 in the downstream direction. Although the silencer panels 22 are described as having smaller successive outer perimeters 24, it should be appreciated that silencer panels 22 having relatively similar outer perimeters 24 may be employed in a housing conducive to such similar outer perimeters 24.

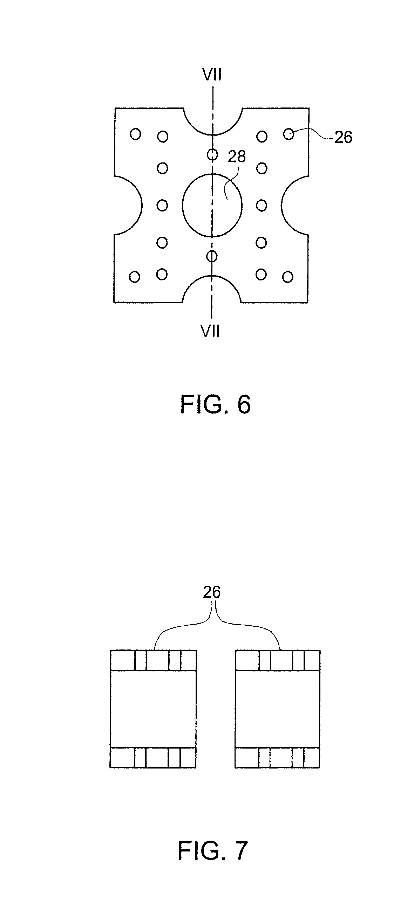

Referring now to FIGS. 5-7, a silencer panel 22 is illustrated. The silencer panel 22 is typically a planar sheet and may be formed of a durable material, such as stainless steel or any other stiff material, for example, and may include a plurality of perforations 26 therein. The perforations are lined with a sound dampening material, such as mineral wool. A plurality of airflow apertures 28 are imposed on the silencer panel 22 and may be formed by a punching process. The airflow apertures 28 may take on various geometric configurations including, but not limited to, circular, rectangular, squared, diamond-shaped, or oval. These are merely illustrative examples of numerous configurations that the airflow apertures 28 may take on.

In operation, the plurality of airflow apertures 28 allow the airflow 14 to pass through the transition duct 16, yet as a result of the staggered orientation of the silencer panels 22, and therefore their respective airflow apertures 28, fewer, if any, direct "sightlines" are present throughout the transition duct 16. The term "sightlines" refers to an alignment of the airflow apertures 28 in a direction of airflow 14. By reducing the number of sightlines, direct and uninterrupted travel of the reverberating sound waves 20 is substantially reduced, thereby resulting in a sound dampening effect on the overall gas turbine inlet system 10. In addition to the advantageous dampening effect, the silencer assembly 18 also functions to reduce the pressure drop seen throughout the gas turbine inlet system 10. This is a function of the reduction in flow velocity of the airflow 14, as compared to a system having the silencers located in a smaller duct downstream of the transition duct 16.

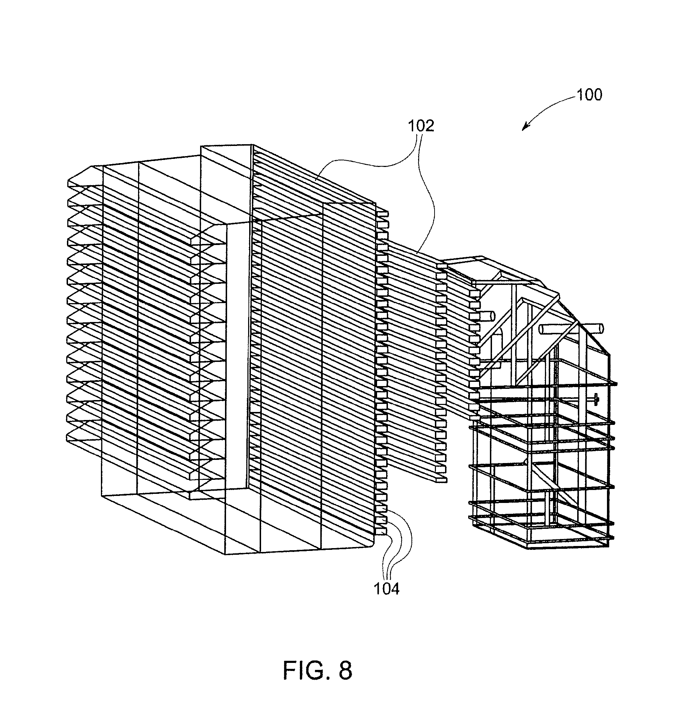

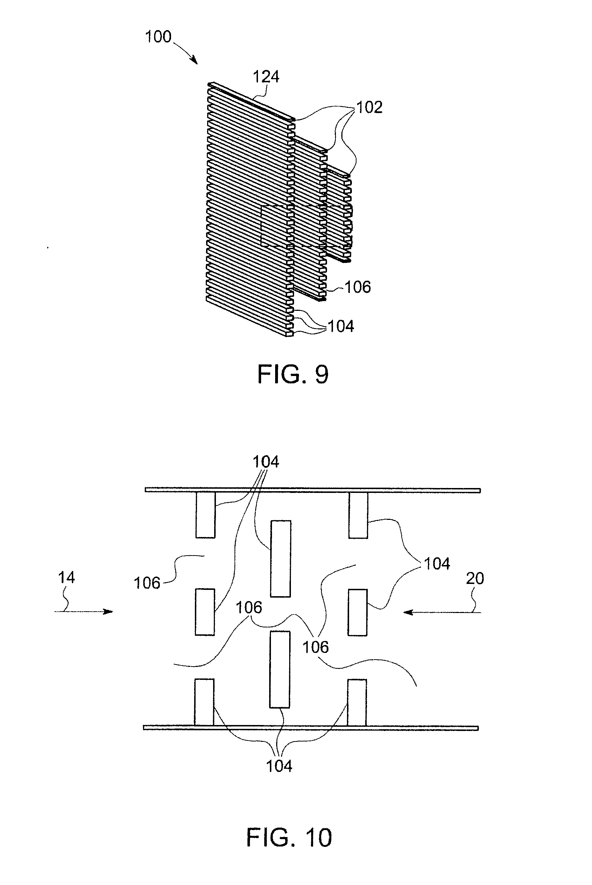

Referring to FIGS. 8 and 9, a second embodiment of a silencer assembly 100 of the gas turbine inlet system 10 is illustrated. The silencer assembly includes a plurality of panel groups 102 that each comprise a plurality of panels 104. The plurality of panel groups 102 are disposed, at least in part, within the transition duct 16 and the plurality of panels 104 are disposed relatively horizontally or vertically (horizontal with respect to illustration) and relatively perpendicular to the airflow 14. The panels 104 of each panel group 102 are oriented relatively parallel to one another and are aligned in a relatively vertical or horizontal arrangement (vertical with respect to illustration). A plurality of gaps 106 are present within each panel group 102 and are defined by respective pairs of panels 104.

The plurality of panel groups 102 are disposed in series and are each defined by an outer perimeter 124. As is the case with the described first embodiment, when disposed within the transition duct 16, the outer perimeter 124 of the plurality of panel groups 102 located downstream is smaller than that of the outer perimeter 124 of respective upstream plurality of panel groups 102. Similarly, it should be appreciated that the panel groups 102 having relatively similar outer perimeters 124 may be employed in a housing conducive to such similar outer perimeters 124.

Referring now to FIG. 10, the orientation of the plurality of panel groups 102 is more closely illustrated. Typically, the plurality of panel groups 102 are arranged to reduce the number of "sightlines," thereby reducing the ability of a sound wave 20 to propagate in an unimpeded manner through the silencer assembly 100. The plurality of panels 104 are configured, such that downstream panels 104 substantially align with the upstream gaps 106. As illustrated, a panel group disposed immediately downstream of another panel group is aligned such that the downstream panels effectively close out the upstream gaps, and may include a slight overlap with the upstream panels. Therefore, the silencer assembly 100 achieves a similar function as that of the first embodiment. Specifically, the silencer assembly 100 dampens sound by imposing impediments to reverberating sound waves 20 within the gas turbine inlet system 10. It should be appreciated that numerous geometric configurations may be employed to form the panels 104. Illustrative examples include oval and diamond shaped, however it is contemplated that any number of shapes may suit the application for its intended purpose.

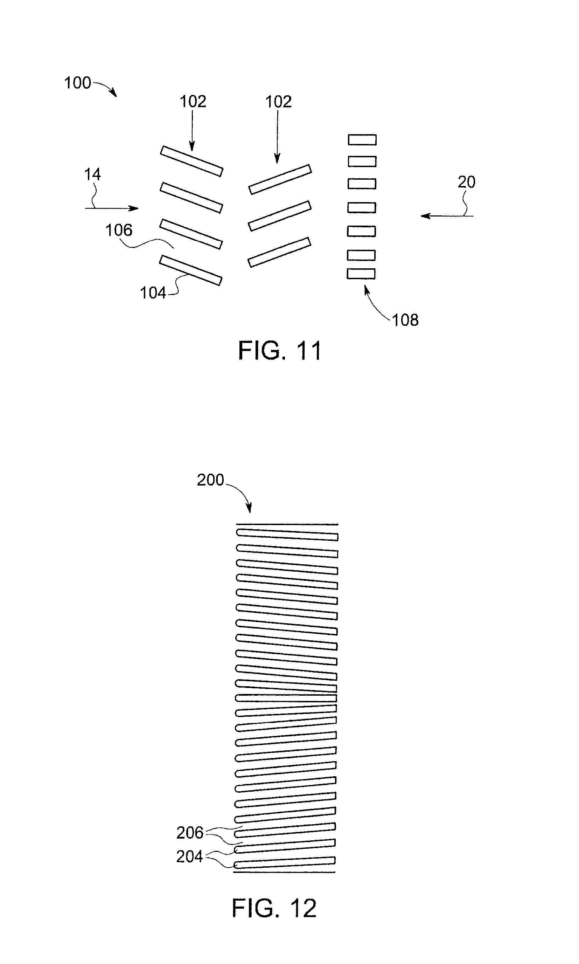

Referring now to FIG. 11, additional embodiments of the silencer assembly 100 are illustrated that employ the general concept of the previously described second embodiment. In each embodiment, the silencer assembly 100 includes the plurality of panel groups 102 that each comprise the plurality of panels 104 oriented at a desired angle to the airflow 14. As with the second embodiment of the silencer assembly 100, the downstream panels are positioned in line with the gaps 106 of the adjacent upstream panels at any desired angle to the airflow 14. In addition to the plurality of panels 104, the silencer assembly 100 may optionally include flow straighteners 108 that function to reduce swirling vortices that may be generated in the airflow 14 as a result of the passage through the plurality of panel groups 102. The flow straighteners 108 impart a straightening effect on the airflow 14, as swirling airflow may be undesirable. As previously described, such an alignment provides the aforementioned advantages, such as sound dampening and pressure drop reduction. The plurality of panels 104 may be formed in any number of shapes or geometries. Examples of such geometries include relatively diamond panels and teardrop panels. These are merely illustrative and should not be considered limiting, as numerous other geometries may be suitable.

Referring to FIG. 12, additional embodiments of a silencer assembly 200 are illustrated. The silencer assembly 200 includes a plurality of panels 204 that extend longitudinally in the direction of the airflow 14, with gaps 206 disposed between the plurality of panels 204. The various embodiments illustrated each provide gaps 206 that do not consist of a path for the airflow that is parallel to the direction of incoming airflow 14 throughout the entire gap 206. Specifically, the airflow 14 direction of travel must be altered in some manner as it passes through the silencer assembly 200. Again, as with previously described embodiments, this reduces the presence of direct sightlines for sound waves 20 to reverberate back through. The plurality of gaps 206 may be angled, with respect to each other, or relatively parallel to one another, but formed in jagged or curved paths. The illustrated paths formed by the gaps 206 are merely exemplary and it is contemplated that numerous other gap paths may be employed. Irrespective of the path formed by the gaps 206, the sound waves 20 are impeded from a direct line of reverberation back through the silencer assembly 200 and the velocity of the airflow 14 is reduced, resulting in an advantageous pressure drop reduction.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A gas turbine inlet system comprising:
a main inlet portion (12), wherein an airflow is introduced to the gas turbine inlet system; and
a silencer assembly (18) comprising:
a first silencing panel (22), wherein the first silencing panel is oriented substantially perpendicularly to the airflow, and wherein the first silencing panel includes a first plurality of airflow apertures (28); and
a second silencing panel (22), wherein the second silencing panel is oriented substantially perpendicularly to the airflow, and wherein the second silencing panel includes a second plurality of airflow apertures (28).

2. The gas turbine inlet system of claim 1, wherein the first silencing panel and the second silencing panel each comprise a relatively stiff material sheet having a plurality of perforations.

3. The gas turbine inlet system of claim 1 or claim 2, wherein the plurality of perforations are lined with a sound absorbing material.

4. The gas turbine inlet system of any preceding claim, wherein the first silencing panel and the second silencing panel are disposed in series and relatively parallel to each other.

5. The gas turbine inlet system of any preceding claim, wherein the first silencing panel and the second silencing panel are disposed substantially within a transition duct of the gas turbine inlet system.

6. The gas turbine inlet system of claim 5, wherein the transition duct includes a varying perimeter that decreases in a direction of the airflow.

7. The gas turbine inlet system of claim 6, wherein the first silencing panel includes a first outer perimeter and the second silencing panel includes a second outer perimeter, wherein the second outer perimeter is smaller than the first outer perimeter.

8. The gas turbine inlet system of any preceding claim, including:
a main inlet portion,
a first group of the first silencing panels that are parallel with one another and are oriented substantially perpendicularly to the airflow, wherein the first group of parallel silencing panels include a first plurality of gaps therebetween; and
a second group of the second silencing panels that are parallel with one another and are oriented substantially perpendicularly to the airflow, wherein the second group of parallel silencing panels include a second plurality of gaps therebetween, and wherein the first plurality of gaps is aligned in a first series of airflow planes and the second plurality of gaps is aligned in a distinct second series of airflow planes.

9. The gas turbine inlet system of claim 8, wherein the first group of parallel silencing panels comprise a circular geometry or a rectangular geometry.

10. A gas turbine inlet system comprising:
a main inlet portion, wherein an airflow is introduced to the gas turbine inlet system; and
a silencer assembly having a first plurality of silencing panels having a first alignment and a second plurality of silencing panels having a second alignment.

11. The gas turbine inlet system of claim 10, wherein the first alignment and the second alignment prevent airflow from passing through the silencer assembly along a single linear plane.

12. The gas turbine inlet system of claim 10 or claim 11, further comprising a plurality of flow straighteners located downstream of the second plurality of silencing panels.

13. The gas turbine inlet system of any one of claims 10 to 12, wherein the first plurality of silencing panels and the second plurality of silencing panels are disposed substantially within a transition duct of the gas turbine inlet system.

14. The gas turbine inlet system of claim 13, wherein the transition duct includes a varying perimeter that decreases in a direction of the airflow.

15. The gas turbine inlet system of claim 14, wherein the first plurality of silencing panels is defined by a first outer perimeter and the second plurality of silencing panels is defined by a second outer perimeter, wherein the second outer perimeter is smaller than the first outer perimeter.
